# EUROPEAN PATENT SPECIFICATION

(11) **EP 4 516 672 B1**
(45) Date of publication and mention of the grant of the patent: **08.04.2026**
(21) Application number: 23275130.5
(22) Date of filing: 30.08.2023
(51) Int. Cl.: B64D 11/00, A47B 31/02, B64D 13/06, B64D 11/04, F25D 3/00

(54) **INTEGRATED CHILLING UNIT FOR AN AIRCRAFT GALLEY**
INTEGRIERTE KÜHLEINHEIT FÜR EINE FLUGZEUGBORDKÜCHE
UNITÉ DE REFROIDISSEMENT INTÉGRÉE POUR CUISINE DE BORD D'AÉRONEF

(43) Date of publication of application: 05.03.2025
(73) Proprietor: B/E Aerospace (UK) Limited, Leighton Buzzard, Bedfordshire LU7 4TB (GB)
(72) Inventor: GROCOTT, Edward J. R., LONDON, SW20 8SP (GB); QURASHI, Shahzaib Hussain, Bedfordshire, LU49GJ (GB); OHL, Craig T., Kansas, 67101 (US)
(74) Representative: Dehns

(56) References cited:
- US-A- 5 632 543
- US-A1- 2017 370 632
- US-A1- 2018 346 122
- US-B1- 9 303 912
- US-B2- 11 214 373
- US-B2- 9 399 516

## Description

### TECHNICAL FIELD

This disclosure relates to aircraft galleys, and in particular to integrated chilling units for aircraft galleys.

### BACKGROUND

It is commonplace for aircraft galleys to have removable galley inserts for chilling items, such as food and beverage items. These removable galley inserts are typically held in place by turn buttons. However, this approach to retaining chilling inserts within the galley is not the best approach for holding the galley inserts in place securely.

In addition, current chilling galley inserts typically have their own electricity supply, such as a battery, and an in-built heat exchanger for chilling their contents. Both a heat exchanger and an electricity supply may be relatively heavy and expensive. Even if an insert with a heat exchanger is powered externally, i.e. the chilling galley insert is connected to an external electricity supply, this will still result in additional complexity, cost and weight.

US 11,214,373 B2 discloses a galley for an aircraft including a cart compartment. The cart compartment has insulating panels covering the interior surfaces.

US20180346122A1 discloses a thermally insulated container removably mounted within an in flight service cart for an aircraft. The container includes a vacuum insulation panel provided between an outer casing and an inner casing.

US9303912B1 discloses a cold tray that may be installed within an interior of a galley cart. The cold tray includes a refrigerant for cooling the interior of the galley cart.

### SUMMARY

When viewed from a first aspect, the present disclosure provides an integrated chilling unit according to claim 1.

The door may be attached to the housing using, e.g., a piano hinge that allows the door to swing between the open and closed position.

The fixing may comprise, for example, a threaded hole arranged to receive a bolt, a threaded protrusion arranged to receive a nut, or any other type of mechanical fixing suitable for fixedly installing the integrated chilling unit in the aircraft galley.

In some examples, the rear wall defines a lower vent, proximal to the bottom wall of the integrated chilling unit; wherein the lower vent is arranged to receive cold air from an external heat exchanger and provide the cold air to the interior of the integrated chilling unit.

Proximal to the bottom wall of the integrated chill unit may be defined as closer to the bottom wall of the integrated chilling unit than the top wall of the integrated chilling unit.

In some examples, the rear wall defines an upper vent, proximal to the top wall of the integrated chilling unit, arranged to expel warmer air from the interior of the integrated chilling unit.

Proximal to the top wall of the integrated chill unit may be defined as closer to the top wall of the integrated chilling unit than the bottom wall of the integrated chilling unit.

In some examples, the first side wall and the second side wall each comprise a protrusion; wherein the protrusions extend into the interior of the integrated chilling unit; and wherein the protrusions are arranged to support a shelf for storing items.

The vacuum insulation structure further comprises: a liner proximal to the interior of the integrated chilling unit; and an exterior cover distal to the interior of the integrated chilling unit; wherein the vacuum insulation panel is arranged between, e.g. sandwiched between, the liner and the exterior cover.

The vacuum insulation structure further comprises a frame; wherein the frame is arranged between, e.g. sandwiched between, the liner and the exterior cover; wherein the frame defines an aperture for locating, e.g. housing, the vacuum insulation panel; wherein the vacuum insulation panel is located within the aperture; and wherein the vacuum insulation panel is at least partially enclosed, e.g. fully enclosed, within the exterior cover, the liner and the frame.

In some examples, the frame has a thickness extending at least partially, e.g. fully, between the liner and the exterior cover; wherein the vacuum insulation panel has a thickness extending at least partially, e.g. partially, between the liner and the exterior cover; wherein the thickness of the frame is greater than the thickness of the vacuum insulation panel; and wherein either: the vacuum insulation panel is attached to the liner, such that there is a gap between the vacuum insulation panel and the exterior cover; or the vacuum insulation panel is attached to the exterior cover, such that there is a gap between the vacuum insulation panel and the liner.

In some examples, the area of the aperture defined by the frame for locating the vacuum insulation panel is larger than the area of the vacuum insulation panel, such that there is a gap between the vacuum insulation panel and the frame.

In some examples, the liner is a stainless steel liner.

The frame comprises an insulating material.

In some examples, the external cover comprises glass reinforced polymer.

In some examples, the door comprises a door vacuum insulation panel.

In some examples, the door comprises: a door liner proximal to the interior of the integrated chilling unit when the door is in the closed position; and an exterior door panel distal the interior of the integrated chilling unit when the door is in the closed position; wherein the door vacuum insulation panel is arranged between, e.g. sandwiched between, the door liner and the exterior door panel.

In some examples, the door further comprises a door vacuum insulation panel frame; wherein the door vacuum insulation panel frame is arranged between the door liner and the exterior door panel; wherein the door vacuum insulation panel frame defines a door vacuum insulation panel aperture for locating, e.g. housing, the door vacuum insulation panel; wherein the door vacuum insulation panel is located within the door vacuum insulation panel aperture; and wherein the door vacuum insulation panel is at least partially, e.g. fully, enclosed within the exterior door panel, the door liner and the door vacuum insulation panel frame.

When viewed from a second aspect, an aircraft galley comprises the integrated chilling unit of any of the previous examples.

In some examples, the aircraft galley further comprises the external heat exchanger arranged to provide cold air to the interior of the integrated chilling unit.

### BRIEF DESCRIPTION OF DRAWINGS

One or more non-limiting examples will now be described, by way of example only, and with reference to the accompanying figures in which:
Figure 1 shows an integrated chilling unit installed within an aircraft galley;
Figure 2 shows a simplified view of an integrated chilling unit for an aircraft galley;
Figure 3 shows a more detailed view of the integrated chilling unit of Figure 2;
Figure 4 shows an exploded view of a side wall of the integrated chilling unit of Figure 2;
Figure 5 shows an exploded view of the structure of the door of the integrated chilling unit of Figure 2;
Figure 6 shows a cross-sectional view of the side wall of Figure 4; and
Figure 7 shows the rear wall of the integrated chilling unit of Figure 2.

### DETAILED DESCRIPTION

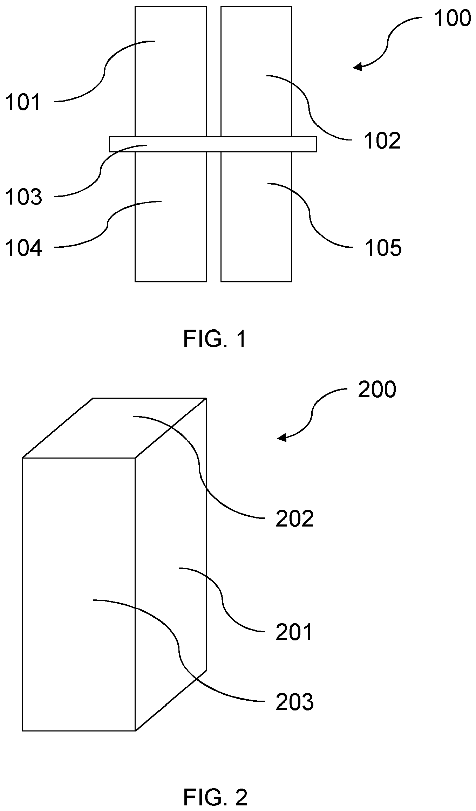

Figure 1 shows an integrated chilling unit 101 installed within an aircraft galley 100. The integrated chilling unit 101 is used for storing and chilling food and beverage items. The integrated chilling unit 101 is installed above waist height within the galley, for ease of access by the aircraft cabin staff. Figure 1 also shows a counter 103 below the integrated chilling unit 101. The counter 103 may be used to handle the contents of the integrated chilling unit 101, hence it is convenient for the aircraft chilling unit to be installed above the counter 103.

Figure 1 also shows a second aircraft galley unit 102, which may be another integrated chilling unit.

Figure 1 further shows a first galley trolley cooling compartment 104 and a second galley trolley cooling compartment 105. These compartments 104, 105 are arranged to receive cooling air from a heat exchanger (not shown) which may be installed, for example, in the ceiling above the aircraft galley 100. Typically, cooling air is supplied to the compartments from the heat exchanger via ducting. The trolley cooling compartments 104, 105 are arranged for stowing trolleys for serving food and beverage items to passengers. When the trolleys are stowed within the compartments 104, 105, the cooling air supplied by the heat exchanger cools the trolleys.

Figure 2 shows a simplified view of an integrated chilling unit 200 for an aircraft galley. The chilling unit may be the chilling unit 101 of Figure 1. The chilling unit 200 comprises side walls 201, a top wall 202 and a bottom wall (not shown), a door 203, and a rear wall (not shown). Together, the side walls 201, the top wall and the bottom wall comprise the housing of the integrated chilling unit 200. The door 203 is attached, e.g. using a piano hinge type attachment (not shown), to the housing in order to move between an open and closed position. The interior of the integrated chilling unit 200 is defined by the side walls 201, the top wall 202, the bottom wall and the door 203, when the door is closed. The interior stores food and beverage items for chilling in an aircraft galley.

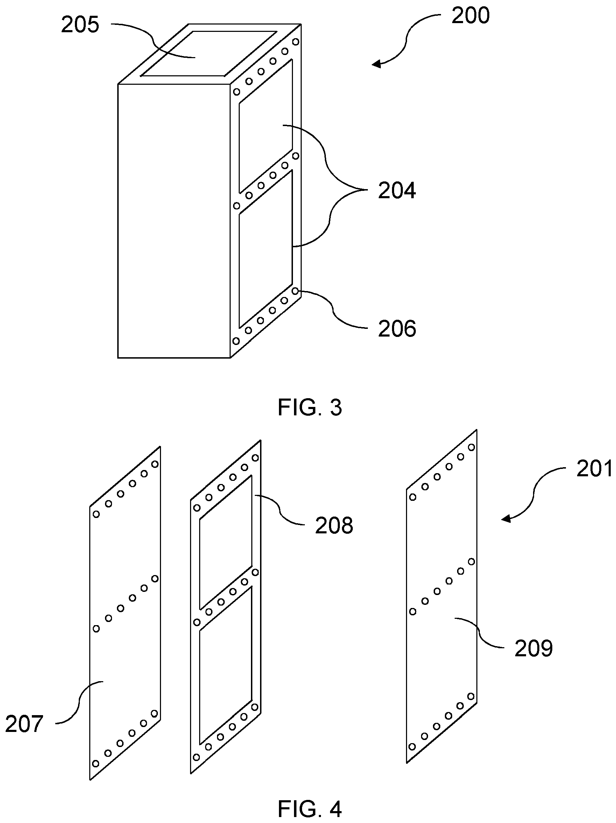

Figure 3 shows a more detailed view of the integrated chilling unit 200 of Figure 2. In Figure 3, side vacuum insulation panels 204 and a top vacuum insulation panel 205 can be seen. These vacuum insulation panels 204, 205 provide insulation to the integrated chilling unit 200 in order to help maintain the temperature of the chilling unit 200. This insulation may allow for more energy efficient operation of the integrated chilling unit 200, as less energy may be required to maintain the temperature of the integrated chilling unit 200.

The vacuum insulation panels 204, 205 are particularly effective at insulating the integrated chilling unit 200. Vacuum insulation panels 204, 205 may be defined as a thermal insulation panels evacuated of air, and vacuum-sealed. Due to their near-complete absence of air, vacuum insulation panels 204, 205 conduct very little heat. This provides excellent thermal efficiency. In addition to the thermal insulation benefits provided by vacuum insulation panels 204, 205, they may also be very light-weight and thin. This may be particularly advantageous in aerospace applications.

The integrated chilling unit 200 also comprises a plurality of fixings 206 for fixedly installing the integrated chilling unit 200 into an aircraft galley, such as aircraft galley 100. These fixings 206 ensure that the integrated chilling unit 200 is installed securely within the aircraft galley, and therefore there may be less risk of the integrated chilling unit 200 moving or dislodging when the aircraft experiences turbulence. Figure 3 shows fixings 206 in the side wall 201 of the integrated chilling unit 200. In some examples, such fixings may be present on the top wall 202, the bottom wall and/or the rear wall 206.

Figure 4 shows an exploded view of a side wall 201 of the integrated chilling unit 200. Figure 4 shows the vacuum insulation panels 204 sandwiched between a stainless steel liner 207 of the side wall 201 and a glass reinforced polymer cover 209. Stainless steel is a particularly suitable material for the liner 207 of the integrated chilling unit 200 as it is easy to clean and is appropriate for environments where hygiene is important. Glass reinforced polymer is suitable for the cover 209 as it is light-weight and robust.

The vacuum insulation panels 204 are positioned within an aperture in a frame 208 made from another insulating material. The material from which the frame 208 is made is more robust than the vacuum insulation panels 204, and therefore may provide protection to the vacuum insulation panels 204 to prevent the vacuum seal from braking. As the frame 208 also has thermal insulation properties, it also provides thermal insulation to the integrated chilling unit 200.

In this example, the vacuum insulation panels 204 are attached to the glass reinforced cover 209 using double sided tape. In this example, the insulation frame 208 is bonded to the stainless steel liner 207 using an adhesive, such as an epoxy resin. In this example, the insulation frame 208 is also bonded to the glass reinforced cover 209 using an adhesive, such as an epoxy resin.

In this example, the structure of the top wall 202 is similar to the structure of the side walls 201. However, the top wall only comprises a single vacuum insulation panel 205.

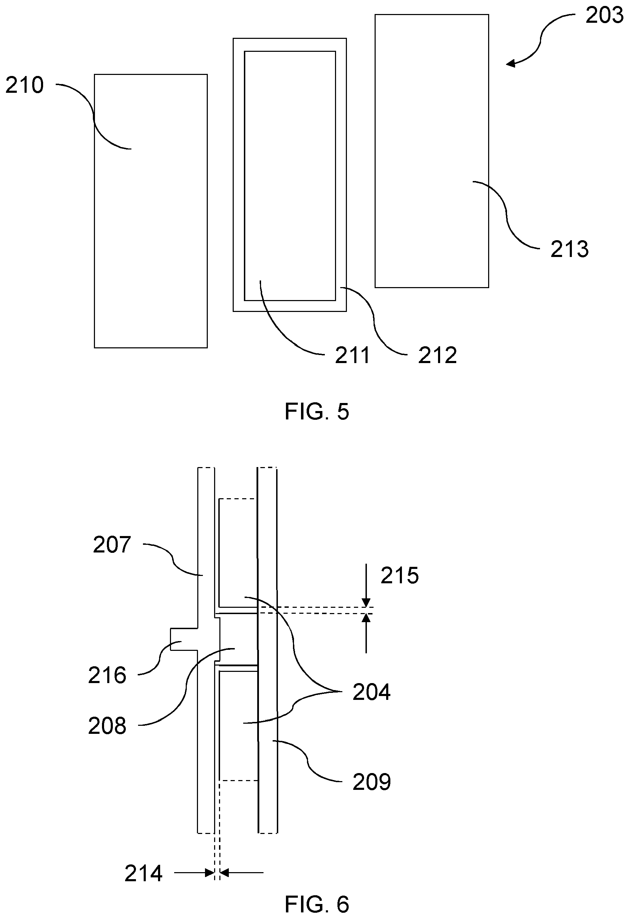

Figure 5 shows an exploded view of the structure of the door 203 of the integrated chilling unit 200. The door 203 comprises a stainless steel door liner 213, a door vacuum insulation panel 211, a door insulation frame 212 and an exterior door panel 210.

In this example, the vacuum insulation panel 211 is taped to door panel 210. Structural adhesive is used to bond the frame 212 to both the door panel 210 and the liner 213. The door is assembled to the integrated galley chilling unit 200 at the hinges using fixings (not shown).

The door 203 further comprises a seal (not shown) around the outer edges of the door 203. The seal creates an air-tight barrier around the door to prevent cold air escaping the integrated chilling unit 200 when the door 203 is closed.

Figure 6 shows a cross-sectional view of the side wall 201. In this figure, the vacuum insulation panels 204 and the frame 208 are bonded to the cover 209. The frame 208 is also bonded to the liner 207. A first gap 214 between the liner 207 and the vacuum insulation panels 204 is shown in the Figure. This first gap 214 is as a result of the insulation frame 208 being thicker than the vacuum insulation panel 204. The first gap 214 protects the vacuum insulation panel 204 from damage by ensuring that the vacuum insulation panel 204 does not come into contact the liner 207. The top wall 202, the bottom wall and the door 203 may have a similar construction, with corresponding first gaps between the vacuum insulation panels 205, 211 and the cover and door panel 210 respectively.

There is also a second gap 215 between the vacuum insulation panels 204 and the insulation frame 208 to ensure that the vacuum insulation panels 204 do not contact the insulation frame 208 and are therefore protected from damage. The second gap results from the apertures for the vacuum insulation panels 204 in the frame 208 being larger than the vacuum insulation panels that are located in them, i.e. having a larger footprint than the footprint of the vacuum insulation panels that are positioned within the apertures.

The first gap 208 and the second gap 215 may account for manufacturing tolerances to allow for inaccuracies in the manufacturing process of any of the parts of the side wall 201. The top wall 202, the bottom wall and the door 203 may have a similar construction, with corresponding second gaps between the vacuum insulation panels 205, 211 and the insulation frames 212.

Figure 6 also shows that the liner 207 comprises a protrusion 216 for supporting a shelf. The opposite side wall 201 comprises a similar protrusion, and a shelf may be placed on top of the protrusions. The shelf (not shown) may be fixedly connected to the protrusions 216 in order to hold it in place when the aircraft experiences turbulence.

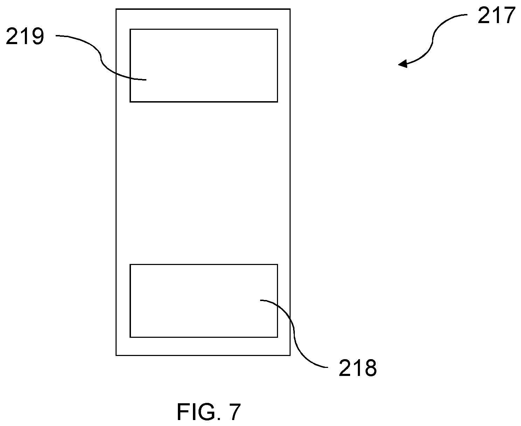

Figure 7 shows the rear wall 217 of the integrated chilling unit 200. Cold air from a heat exchanger is supplied to a lower vent 218 via ducting (not shown). The heat exchanger from which supplies the cold air may also be used to cool aircraft galley trolley compartments, such as those shown in Figure 1. The warm air, which has been heated up as a result of cooling the integrated chilling unit 200, leaves the chilling unit 200 via the upper vent 219. As a result of utilising a heat exchanger external to the integrated chilling unit 200, no power supply is necessary to the integrated chilling unit 200 and it does not require its own heat exchanger.

## Claims

1. An integrated chilling unit (101; 200) for above-counter installation in an aircraft galley (100), the integrated chilling unit (101; 200) comprising:
a housing, comprising:
a top wall (202);
a rear wall (217);
a first side wall (201);
a second side wall (201); and
a bottom wall;
wherein the integrated chilling unit (101; 200) further comprises:
a door (203) hingedly attached to the housing to move between an open position and a closed position;
wherein the housing and the door (203) define an interior arranged to store items for cooling when the door (203) is in the closed position; and
wherein the interior is accessible for the storage and/or removal of items when the door (203) is in the open position;
wherein the integrated chilling unit (101; 200) further comprises:
a seal arranged to seal between the housing and the door (203) when the door (203) is in the closed position;
wherein the housing comprises at least one fixing (206) arranged for fixedly installing the integrated chilling unit (101; 200) in the aircraft galley (100);
wherein at least one of the first side wall (201), the second side wall (201), the top wall (202) and the bottom wall comprises a vacuum insulation structure; and
wherein the vacuum insulation structure comprises:
a vacuum insulation panel (204, 205);
**characterised in that** the vacuum insulation structure further comprises:
a liner (207) proximal to the interior of the integrated chilling unit (101; 200);
an exterior cover (209) distal to the interior of the integrated chilling unit (101; 200); and
a frame (208); and
wherein
the vacuum insulation panel (204, 205) is arranged between the liner (207) and the exterior cover (209);
the frame (208) is arranged between the liner (207) and the exterior cover (209);
and **characterised in that** the frame (208) defines an aperture for locating the vacuum insulation panel (204, 205);
the vacuum insulation panel (204, 205) is located within the aperture;
the vacuum insulation panel (204, 205) is at least partially enclosed within the exterior cover (209), the liner (207) and the frame (208); and
the frame (208) comprises an insulating material.

2. The integrated chilling unit (101; 200) as claimed in claim 1, wherein the rear wall (217) defines a lower vent (218), proximal to the bottom wall of the integrated chilling unit (101; 200);
wherein the lower vent (218) is arranged to receive cold air from an external heat exchanger and provide the cold air to the interior of the integrated chilling unit (101; 200).

3. The integrated chilling unit (101; 200) as claimed in claim 1 or 2, wherein the rear wall (217) defines an upper vent (219), proximal to the top wall (202) of the integrated chilling unit (101; 200), arranged to expel warmer air from the interior of the integrated chilling unit (101; 200).

4. The integrated chilling unit as claimed in any one of the preceding claims, wherein the first side wall (201) and the second side wall (201) each comprise a protrusion (216);
wherein the protrusions (216) extend into the interior of the integrated chilling unit (101; 200); and
wherein the protrusions (216) are arranged to support a shelf for storing items.

5. The integrated chilling unit (101; 200) as claimed in any one of the preceding claims, wherein the frame (208) has a thickness extending at least partially between the liner (207) and the exterior cover (209);
wherein the vacuum insulation panel (204, 205) has a thickness extending at least partially between the liner (207) and the exterior cover (209);
wherein the thickness of the frame (208) is greater than the thickness of the vacuum insulation panel (204, 205);
and wherein either:
the vacuum insulation panel (204, 205) is attached to the liner (207), such that there is a gap between the vacuum insulation panel (204, 205) and the exterior cover (209); or
the vacuum insulation panel (204, 205) is attached to the exterior cover (209), such that there is a gap (214) between the vacuum insulation panel (204, 205) and the liner (207).

6. The integrated chilling unit (101; 200) as claimed in any one of the preceding claims, wherein the area of the aperture defined by the frame (208) for locating the vacuum insulation panel (204, 205) is larger than the area of the vacuum insulation panel (204, 205), such that there is a gap (215) between the vacuum insulation panel (204, 205) and the frame (208).

7. The integrated chilling unit (101; 200) as claimed in any one of the preceding claims, wherein the liner (207) is a stainless steel liner.

8. The integrated chilling unit (101; 200) as claimed in any one of the preceding claims, wherein the external cover (209) comprises glass reinforced polymer.

9. The integrated chilling unit (101; 200) as claimed in any one of the preceding claims, wherein the door (203) comprises a door vacuum insulation panel (211).

10. The integrated chilling unit as claimed in claim 9, wherein the door (203) comprises:
a door liner (213) proximal to the interior of the integrated chilling unit (101; 200) when the door (203) is in the closed position; and
an exterior door panel (210) distal the interior of the integrated chilling unit (101; 200) when the door (203) is in the closed position;
wherein the door vacuum insulation panel (211) is arranged between the door liner (213) and the exterior door panel (210).

11. The integrated chilling unit (101; 200) as claimed in claim 10, wherein the door (203) further comprises a door vacuum insulation panel frame (212);
wherein the door vacuum insulation panel frame (212) is arranged between the door liner (213) and the exterior door panel (210);
wherein the door vacuum insulation panel frame (212) defines a door vacuum insulation panel aperture for locating the door vacuum insulation panel (211);
wherein the door vacuum insulation panel (211) is located within the door vacuum insulation panel aperture; and
wherein the door vacuum insulation panel (211) is at least partially enclosed within the exterior door panel (210), the door liner (213) and the door vacuum insulation panel frame (212).

12. An aircraft galley (100) comprising the integrated chilling unit (101; 200) as claimed in any one of the preceding claims.

## Patentansprüche

1. Integrierte Kühleinheit (101; 200) für eine Installation über der Theke in einer Luftfahrzeugbordküche (100), wobei die integrierte Kühleinheit (101; 200) umfasst:
ein Gehäuse, umfassend:
eine obere Wand (202);
eine Rückwand (217);
eine erste Seitenwand (201);
eine zweite Seitenwand (201); und
eine Bodenwand;
wobei die integrierte Kühleinheit (101; 200) ferner umfasst:
eine Tür (203), die gelenkig an dem Gehäuse angebracht ist, um sich zwischen einer offenen Position und einer geschlossenen Position zu bewegen;
wobei das Gehäuse und die Tür (203) einen Innenraum definieren, der dazu angeordnet ist, Gegenstände zum Kühlen zu lagern, wenn sich die Tür (203) in der geschlossenen Position befindet; und
wobei der Innenraum für die Lagerung und/oder Entnahme von Gegenständen zugänglich ist, wenn sich die Tür (203) in der offenen Position befindet;
wobei die integrierte Kühleinheit (101; 200) ferner umfasst:
eine Dichtung, die dazu angeordnet ist, zwischen dem Gehäuse und der Tür (203) abzudichten, wenn sich die Tür (203) in der geschlossenen Position befindet;
wobei das Gehäuse mindestens ein Befestigungselement (206) umfasst, das zum festen Installieren der integrierten Kühleinheit (101; 200) in der Luftfahrzeugbordküche (100) angeordnet ist;
wobei mindestens eine der ersten Seitenwand (201), der zweiten Seitenwand (201), der oberen Wand (202) und der Bodenwand eine Vakuumisolationsstruktur umfasst; und
wobei die Vakuumisolationsstruktur umfasst:
ein Vakuumisolationspaneel (204, 205);
**dadurch gekennzeichnet, dass** die Vakuumisolationsstruktur ferner umfasst:
eine Auskleidung (207) nahe dem Innenraum der integrierten Kühleinheit (101; 200);
eine Außenabdeckung (209) fern dem Innenraum der integrierten Kühleinheit (101; 200); und
einen Rahmen (208); und
wobei
das Vakuumisolationspaneel (204, 205) zwischen der Auskleidung (207) und der Außenabdeckung (209) angeordnet ist;
der Rahmen (208) zwischen der Auskleidung (207) und der Außenabdeckung (209) angeordnet ist;
und **dadurch gekennzeichnet, dass** der Rahmen (208) eine Öffnung zum Positionieren des Vakuumisolationspaneels (204, 205) definiert;
sich das Vakuumisolationspaneel (204, 205) innerhalb der Öffnung befindet;
das Vakuumisolationspaneel (204, 205) zumindest teilweise innerhalb der Außenabdeckung (209), der Auskleidung (207) und des Rahmens (208) eingeschlossen ist; und
der Rahmen (208) ein Isoliermaterial umfasst.

2. Integrierte Kühleinheit (101; 200) nach Anspruch 1, wobei die Rückwand (217) eine untere Lüftungsöffnung (218) nahe der Bodenwand der integrierten Kühleinheit (101; 200) definiert; wobei die untere Lüftungsöffnung (218) dazu angeordnet ist, kalte Luft von einem externen Wärmetauscher zu empfangen und die kalte Luft dem Innenraum der integrierten Kühleinheit (101; 200) bereitzustellen.

3. Integrierte Kühleinheit (101; 200) nach Anspruch 1 oder 2, wobei die Rückwand (217) eine obere Lüftungsöffnung (219) nahe der oberen Wand (202) der integrierten Kühleinheit (101; 200) definiert, die dazu angeordnet ist, wärmere Luft aus dem Innenraum der integrierten Kühleinheit (101; 200) auszustoßen.

4. Integrierte Kühleinheit nach einem der vorhergehenden Ansprüche, wobei die erste Seitenwand (201) und die zweite Seitenwand (201) jeweils einen Vorsprung (216) umfassen;
wobei sich die Vorsprünge (216) in den Innenraum der integrierten Kühleinheit (101; 200) erstrecken; und
wobei die Vorsprünge (216) dazu angeordnet sind, einen Regalboden zum Lagern von Gegenständen zu stützen.

5. Integrierte Kühleinheit (101; 200) nach einem der vorhergehenden Ansprüche, wobei der Rahmen (208) eine Dicke aufweist, die sich zumindest teilweise zwischen der Auskleidung (207) und der Außenabdeckung (209) erstreckt;
wobei das Vakuumisolationspaneel (204, 205) eine Dicke aufweist, die sich zumindest teilweise zwischen der Auskleidung (207) und der Außenabdeckung (209) erstreckt;
wobei die Dicke des Rahmens (208) größer ist als die Dicke des Vakuumisolationspaneels (204, 205);
und wobei entweder:
das Vakuumisolationspaneel (204, 205) an der Auskleidung (207) angebracht ist, sodass ein Spalt zwischen dem Vakuumisolationspaneel (204, 205) und der Außenabdeckung (209) vorhanden ist; oder
das Vakuumisolationspaneel (204, 205) an der Außenabdeckung (209) angebracht ist, sodass ein Spalt (214) zwischen dem Vakuumisolationspaneel (204, 205) und der Auskleidung (207) vorhanden ist.

6. Integrierte Kühleinheit (101; 200) nach einem der vorhergehenden Ansprüche, wobei die Fläche der Öffnung, die durch den Rahmen (208) zum Positionieren des Vakuumisolationspaneels (204, 205) definiert wird, größer ist als die Fläche des Vakuumisolationspaneels (204, 205), sodass ein Spalt (215) zwischen dem Vakuumisolationspaneel (204, 205) und dem Rahmen (208) vorhanden ist.

7. Integrierte Kühleinheit (101; 200) nach einem der vorhergehenden Ansprüche, wobei die Auskleidung (207) eine Edelstahlauskleidung ist.

8. Integrierte Kühleinheit (101; 200) nach einem der vorhergehenden Ansprüche, wobei die Außenabdeckung (209) glasverstärktes Polymer umfasst.

9. Integrierte Kühleinheit (101; 200) nach einem der vorhergehenden Ansprüche, wobei die Tür (203) ein Türvakuumisolationspaneel (211) umfasst.

10. Integrierte Kühleinheit nach Anspruch 9, wobei die Tür (203) umfasst:
eine Türauskleidung (213), die nahe dem Innenraum der integrierten Kühleinheit (101; 200) ist, wenn sich die Tür (203) in der geschlossenen Position befindet; und
ein Türaußenpaneel (210), das fern dem Innenraum der integrierten Kühleinheit (101; 200) ist, wenn sich die Tür (203) in der geschlossenen Position befindet;
wobei das Türvakuumisolationspaneel (211) zwischen der Türauskleidung (213) und dem Türaußenpaneel (210) angeordnet ist.

11. Integrierte Kühleinheit (101; 200) nach Anspruch 10, wobei die Tür (203) ferner einen Türvakuumisolationspaneelrahmen (212) umfasst;
wobei der Türvakuumisolationspaneelrahmen (212) zwischen der Türauskleidung (213) und dem Türaußenpaneel (210) angeordnet ist;
wobei der Türvakuumisolationspaneelrahmen (212) eine Türvakuumisolationspaneelöffnung zum Positionieren des Türvakuumisolationspaneels (211) definiert;
wobei sich das Türvakuumisolationspaneel (211) innerhalb der Türvakuumisolationspaneelöffnung befindet; und
wobei das Türvakuumisolationspaneel (211) zumindest teilweise innerhalb des Türaußenpaneels (210), der Türauskleidung (213) und des Türvakuumisolationspaneelrahmens (212) eingeschlossen ist.

12. Luftfahrzeugbordküche (100), umfassend die integrierte Kühleinheit (101; 200) nach einem der vorhergehenden Ansprüche.

## Revendications

1. Unité de refroidissement intégrée (101 ; 200) destinée à être installée au-dessus d'un comptoir dans une cuisine de bord d'aéronef (100), l'unité de refroidissement intégrée (101 ; 200) comprenant :
un boîtier comprenant :
une paroi supérieure (202) ;
une paroi arrière (217) ;
une première paroi latérale (201) ;
une seconde paroi latérale (201) ; et
une paroi inférieure ;
l'unité de refroidissement intégrée (101 ; 200) comprenant en outre :
une porte (203) fixée de manière articulée au boîtier pour se déplacer entre une position ouverte et une position fermée ;
le boîtier et la porte (203) définissant un intérieur aménagé pour stocker des articles à refroidir lorsque la porte (203) est en position fermée ; et
l'intérieur étant accessible pour le stockage et/ou le retrait d'objets lorsque la porte (203) est en position ouverte ;
l'unité de refroidissement intégrée (101 ; 200) comprenant en outre :
un joint conçu pour assurer l'étanchéité entre le boîtier et la porte (203) lorsque la porte (203) est en position fermée ;
le boîtier comprenant au moins une fixation (206) prévue pour installer de manière fixe l'unité de refroidissement intégrée (101 ; 200) dans la cuisine de bord d'aéronef (100) ;
au moins l'une de la première paroi latérale (201), de la seconde paroi latérale (201), de la paroi supérieure (202) et de la paroi inférieure comprenant une structure d'isolation sous vide ; et
la structure d'isolation sous vide comprenant :
un panneau d'isolation sous vide (204, 205) ;
**caractérisée en ce que** la structure d'isolation sous vide comprend en outre :
un revêtement (207) proche de l'intérieur de l'unité de refroidissement intégrée (101 ; 200) ;
un couvercle extérieur (209) éloigné de l'intérieur de l'unité de refroidissement intégrée (101 ; 200) ; et
un cadre (208) ; et
dans laquelle
le panneau d'isolation sous vide (204, 205) est disposé entre le revêtement (207) et le couvercle extérieur (209) ;
le cadre (208) est disposé entre le revêtement (207) et le couvercle extérieur (209) ;
et **caractérisée en ce que** le cadre (208) définit une ouverture pour positionner le panneau d'isolation sous vide (204, 205) ;
le panneau d'isolation sous vide (204, 205) est positionné à l'intérieur de l'ouverture ;
le panneau d'isolation sous vide (204, 205) est au moins partiellement enfermé dans le couvercle extérieur (209), le revêtement (207) et le cadre (208) ; et
le cadre (208) comprend un matériau isolant.

2. Unité de refroidissement intégrée (101 ; 200) selon la revendication 1, dans laquelle la paroi arrière (217) définit un évent inférieur (218), proche de la paroi inférieure de l'unité de refroidissement intégrée (101 ; 200) ;
dans laquelle l'évent inférieur (218) est conçu pour recevoir l'air froid d'un échangeur de chaleur externe et fournir l'air froid à l'intérieur de l'unité de refroidissement intégrée (101 ; 200).

3. Unité de refroidissement intégrée (101 ; 200) selon la revendication 1 ou 2, dans laquelle la paroi arrière (217) définit un évent supérieur (219), proche de la paroi supérieure (202) de l'unité de refroidissement intégrée (101 ; 200), agencé pour expulser l'air plus chaud de l'intérieur de l'unité de refroidissement intégrée (101 ; 200).

4. Unité de refroidissement intégrée selon l'une quelconque des revendications précédentes, dans laquelle la première paroi latérale (201) et la seconde paroi latérale (201) comprennent chacune une saillie (216) ;
dans laquelle les saillies (216) s'étendent à l'intérieur de l'unité de refroidissement intégrée (101 ; 200) ; et
dans laquelle les saillies (216) sont disposées de façon à supporter une étagère destinée à ranger des objets.

5. Unité de refroidissement intégrée (101 ; 200) selon l'une quelconque des revendications précédentes, dans laquelle le cadre (208) a une épaisseur s'étendant au moins partiellement entre le revêtement (207) et le couvercle extérieur (209) ;
dans laquelle le panneau d'isolation sous vide (204, 205) a une épaisseur s'étendant au moins partiellement entre le revêtement (207) et le couvercle extérieur (209) ;
dans laquelle l'épaisseur du cadre (208) est supérieure à l'épaisseur du panneau d'isolation sous vide (204, 205) ;
et dans laquelle soit :
le panneau d'isolation sous vide (204, 205) est fixé au revêtement (207), de sorte qu'il y ait un espace entre le panneau d'isolation sous vide (204, 205) et le revêtement extérieur (209) ; soit
le panneau d'isolation sous vide (204, 205) est fixé au couvercle extérieur (209), de sorte qu'il y ait un espace (214) entre le panneau d'isolation sous vide (204, 205) et le revêtement (207).

6. Unité de refroidissement intégrée (101 ; 200) selon l'une quelconque des revendications précédentes, dans laquelle la surface de l'ouverture définie par le cadre (208) pour positionner le panneau d'isolation sous vide (204, 205) est plus grande que la surface du panneau d'isolation sous vide (204, 205), de sorte qu'il existe un espace (215) entre le panneau d'isolation sous vide (204, 205) et le cadre (208).

7. Unité de refroidissement intégrée (101 ; 200) selon l'une quelconque des revendications précédentes, dans laquelle le revêtement (207) est un revêtement en acier inoxydable.

8. Unité de refroidissement intégrée (101 ; 200) selon l'une quelconque des revendications précédentes, dans laquelle le couvercle externe (209) comprend un polymère renforcé de verre.

9. Unité de refroidissement intégrée (101 ; 200) selon l'une quelconque des revendications précédentes, dans laquelle la porte (203) comprend un panneau d'isolation sous vide de porte (211).

10. Unité de refroidissement intégrée selon la revendication 9, dans laquelle la porte (203) comprend :
un revêtement de porte (213) proche de l'intérieur de l'unité de refroidissement intégrée (101 ; 200) lorsque la porte (203) est en position fermée ; et
un panneau de porte extérieur (210) éloigné de l'intérieur de l'unité de refroidissement intégrée (101 ; 200) lorsque la porte (203) est en position fermée ;
dans laquelle le panneau d'isolation sous vide de porte (211) est disposé entre le revêtement de porte (213) et le panneau de porte extérieur (210).

11. Unité de refroidissement intégrée (101 ; 200) selon la revendication 10, dans laquelle la porte (203) comprend en outre un cadre de panneau d'isolation sous vide de porte (212) ;
dans laquelle le cadre de panneau d'isolation sous vide de porte (212) est disposé entre le revêtement de porte (213) et le panneau de porte extérieur (210) ;
dans laquelle le cadre de panneau d'isolation sous vide de porte (212) définit une ouverture de panneau d'isolation sous vide de porte pour positionner le panneau d'isolation sous vide de porte (211) ;
dans laquelle le panneau d'isolation sous vide de porte (211) est positionné à l'intérieur de l'ouverture de panneau d'isolation sous vide de porte ; et
dans laquelle le panneau d'isolation sous vide de porte (211) est au moins partiellement enfermé dans le panneau de porte extérieur (210), le revêtement de porte (213) et le cadre de panneau d'isolation sous vide de porte (212).

12. Cuisine de bord d'aéronef (100) comprenant l'unité de refroidissement intégrée (101 ; 200) selon l'une quelconque des revendications précédentes.
